# EUROPÄISCHE PATENTSCHRIFT

(11) **EP 4 066 595 B1**
(45) Veröffentlichungstag und Bekanntmachung des Hinweises auf die Patenterteilung: **12.08.2026**
(21) Anmeldenummer: 20811251.6
(22) Anmeldetag: 17.11.2020
(51) Int. Cl.: H05B 3/56

(54) **ELEKTRISCHE FLÄCHENHEIZUNG MIT SELBSTBEGRENZENDEM HEIZKABEL**
ELECTRICAL AREA HEATING SYSTEM HAVING SELF-LIMITING HEATING CABLE
SYSTÈME DE CHAUFFAGE DE ZONE ÉLECTRIQUE AYANT UN CÂBLE CHAUFFANT À LIMITATION AUTOMATIQUE

(30) Priorität: 25.11.2019 DE 102019131875
(43) Veröffentlichungstag der Anmeldung: 05.10.2022
(73) Patentinhaber: KE KELIT GmbH, 4020 Linz (AT)
(72) Erfinder: HUNZIKER, Urs, 8706 Meilen (CH); WURMITZER, Maximilian Johannes, 1120 Wien (AT); EGGER, Karl, 4020 Linz (AT)
(74) Vertreter: Dilg, Haeusler, Schindelmann Patentanwaltsgesellschaft mbH
(86) Internationale Anmeldenummer: PCT/EP2020/082420
(87) Internationale Veröffentlichungsnummer: WO 2021/104945

(56) Entgegenhaltungen:
- WO-A1-2011/001953
- DE-U1- 202007 015 294
- JP-A- 2001 267 049
- KR-B1- 101 219 790
- US-A1- 2015 257 205

## Beschreibung

Die Erfindung betrifft eine elektrische Flächenheizung für den Baubereich mit einem selbstbegrenzenden Heizkabel. Weiterhin betrifft die Erfindung ein Herstellen einer elektrischen Flächenheizung. Ferner betrifft die Erfindung ein selbstbegrenzendes Heizkabel für eine elektrische Flächenheizung und ein Herstellen eines selbstbegrenzenden Heizkabels.

Die Erfindung kann sich somit auf das technische Gebiet von Heizsystemen, insbesondere elektrischen Flächenheizungen, beziehen.

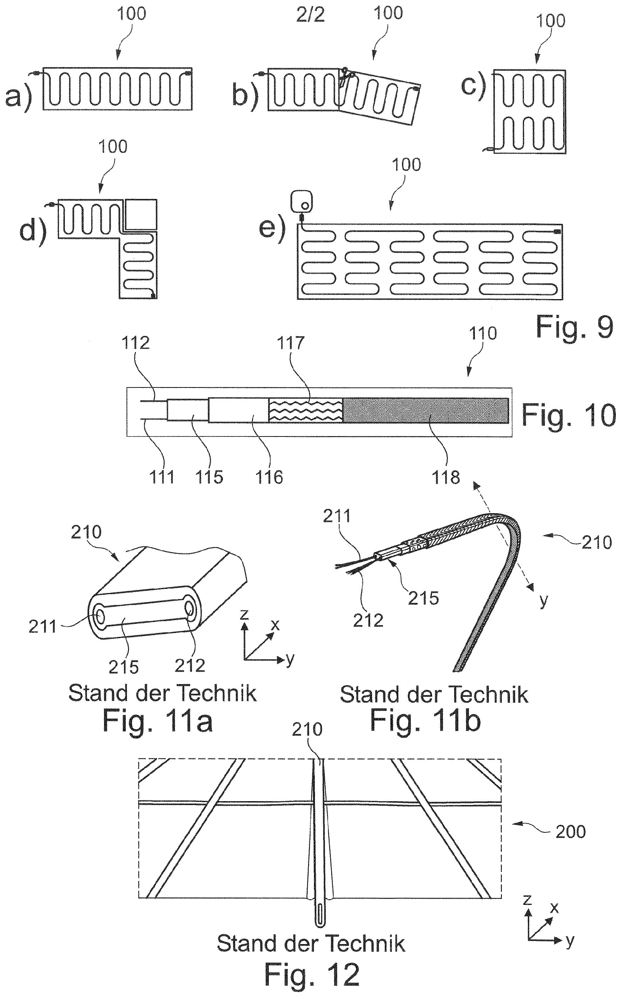

Selbstbegrenzende (oder selbstregulierende) Heizkabel werden in Heizsystemen verwendet, um einer Überhitzung und dadurch entstehenden Gefahren entgegenzuwirken. Die **Figuren 11a und 11b** zeigen ein konventionelles selbstbegrenzendes Heizkabel 210, worin zwei niederohmige parallele Längenleiter 211, 212 mittels eines selbstregulierenden Materials 215 verbunden sind, welches einen höheren Widerstandswert aufweist als die Längenleiter 211, 212. Bei Zuführen von Energie in Form von Strom erwärmt sich das selbstregulierende Material 215 (Heizeffekt). Dabei ist das selbstregulierende Material 215 derart beschaffen, dass sein Widerstand bei zunehmender Temperatur (Erwärmung) sehr stark ansteigt. Auf diese Weise wird die Maximaltemperatur des Heizkabels 210 begrenzt.

**Figur 11a** zeigt hierbei einen Querschnitt durch das selbstbegrenzende Heizkabel 210. Generell werden selbstbegrenzende Heizkabel 210 als Flachkabel-Heizkabel ausgestaltet, bei welchen die Längenleiter 211, 212 parallel nebeneinander (mit dem selbstbegrenzenden Material 215 dazwischen) angeordnet sind, wodurch sich senkrecht zu der Längenrichtung x des Kabels eine Breitenrichtung y ergibt, welche deutlich größer ist als die zugehörige Höhenrichtung z (welche senkrecht zu Längenrichtung und Breitenrichtung orientiert ist).

Die typische Bauform als Flachband-Heizkabel aus dem Stand der Technik hat einen Zusammenhang mit der Funktionsweise eines selbstbegrenzenden Kabels: durch die breite Ausgestaltung des hochohmigen Leiters im Steg zwischen den beiden niederohmigen Leitern entsteht eine homogene Zone in welcher ein gleichmässig verteilter Strom pro Fläche entsteht. Dies ist für die Funktionsweise eines derartigen Kabels von Bedeutung, weil dadurch sichergestellt wird, dass (bei gleichförmiger Wärmeableitung) alle Teile des Systems gleichzeitig auf derselben Temperaturüberhöhung gegenüber der Umgebungstemperatur sind. Wenn nur ein einzelner Spot im Kabel im dauernden Lastwechseln zwischen Ein- und Auszustand den ganzen Rest des Heizsystems regeln würde, könnte die Zuverlässigkeit des Systems sinken. Dies wegen der punktuellen Materialermüdung an den entsprechenden Stellen mit entsprechend überhöhten Temperaturen.

**Figur 11b** zeigt, dass ein selbstbegrenzendes Heizkabel 210 gemäss dem Stand der Technik aufgrund des Flachband-Aufbaus die Eigenschaft hat, sich im Wesentlichen nur in einer Biegerichtung bzw. Biegeachse (über die Breitenrichtung y) biegen zu lassen. Bei einer Biegung über die Höhenrichtung bzw. Höhenachse z würde es zu einer Aufwölbung des selbstbegrenzenden Heizkabels 210 kommen. Die typische Aufwölbung eines Flachband-Heizkabels entsteht durch den inneren Aufbau (elektrische Leiter sind weniger elastisch als elektrische Isolation) und durch die Kabelgeometrie (Flachband mit Breitenausdehnung größer bzw. viel größer als Höhenausdehnung; y > z, bzw. y > > z). Beides erzeugt bei einer Beugung um die Biegeachse z ein Ausweichen in eine andere Richtung.

Wie in **Figur 12** gezeigt, können konventionelle selbstbegrenzende Heizkabel 210 in elektrischen Flächenheizungen 200 verbaut werden. Weil die selbstregulierenden Heizkabel 210 aber als Flachband-Heizkabel (und den entsprechenden Biegeeigenschaften, siehe oben) ausgestaltet sind, werden diese senkrecht (stehend) montiert, also mit der Breitenrichtung des Flachband-Heizkabels in Höhenrichtung der Flächenheizung 200 orientiert. Dies deswegen, damit beim Biegen keine Aufwölbung (wie oben beschrieben) des selbstbegrenzenden Heizkabels 210 passiert. Um ein derartiges selbstbegrenzendes Heizkabels 210 in einer elektrischen Flächenheizung 200 zu verwenden und dabei eine gebogene (schlangen- oder mäanderförmige) Verlegung des selbstbegrenzenden Heizkabels 210 in der Fläche zu realisieren, werden solche Systeme 200 also mit senkrechten (vertikal) angeordneten selbstbegrenzenden Heizkabeln 210 realisiert.

JP 2001 267049 A beschreibt ein selbstbegrenzendes Heizkabel, dessen Querschnitt rund ist und welches in mehrere Richtungen deformiert werden kann. Um einen runden Querschnitt zu erhalten, werden die Längenleiter miteinander verdrillt. Die Längenleiter sind dabei jeweils von selbstbegrenzendem Material zylindrisch ummantelt.

In US 2015/257205 A1 wird ein Heizelement beschrieben, welches besonders flexibel verformt werden kann. Um diese Flexibilität zu erreichen sind bei dem schnurartigen Heizelement leitfähige Fasern parallel zueinander um einen Kern gewickelt und mit einem isolierenden Film bedeckt, der Silikon enthält. Das beschriebene Heizelement hat keine selbstbegrenzenden Eigenschaften.

Es ist eine Aufgabe der vorliegenden Erfindung eine elektrische Flächenheizung bereitzustellen, welche besonders sicher (z.B. in Hinblick auf Überhitzung) und zugleich besonderes dünn (und damit besonders flexibel und platzsparend verlegbar) ist.

Diese Aufgabe wird mit den Gegenständen der unabhängigen Ansprüche gelöst. Vorteilhafte Ausgestaltungen ergeben sich aus den abhängigen Ansprüchen.

Gemäß einem Aspekt ist eine elektrische Flächenheizung zum Verlegen im Baubereich beschrieben. Die elektrische Flächenheizung weist auf: i) ein selbstbegrenzendes Heizkabel, und ii) eine Trägerstruktur, welche entlang zweier Haupterstreckungsrichtungen (Längenrichtung x und Breitenrichtung y) ausgebildet ist und eine Trägerebene aufspannt. Zumindest ein Abschnitt des selbstbegrenzenden Heizkabels (oder das gesamte) ist an und/oder in (z.B. Oberflächen-verlegt oder eingebettet) der Trägerstruktur (bzw. deren Trägermaterial) gebogen angeordnet. Die Höhe des gebogenen Abschnitts des selbstbegrenzenden Heizkabels (insbesondere auch die Höhe der elektrischen Flächenheizung) ist in einer Höhenrichtung z, welche senkrecht zu den zwei Haupterstreckungsrichtungen (x, y) orientiert ist, 15 mm oder weniger.

Gemäß einem weiteren Aspekt ist ein Verfahren zum Herstellen einer elektrischen Flächenheizung für den Baubereich beschrieben. Das Verfahren weist auf: i) Bereitstellen eines selbstbegrenzenden Heizkabels, ii) Bereitstellen einer Trägerstruktur, welche entlang zweier Haupterstreckungsrichtungen ausgebildet ist und eine Trägerebene aufspannt, iii) Biegen von zumindest einem Abschnitt des selbstbegrenzenden Heizkabels, und iv) Anordnen von zumindest dem gebogenen Abschnitt des selbstbegrenzenden Heizkabels an und/oder in der Trägerstruktur derart, dass die Höhe des gebogenen Abschnitts des selbstbegrenzenden Heizkabels in einer Höhenrichtung, welche senkrecht zu den zwei Haupterstreckungsrichtungen orientiert ist, 15 mm oder weniger ist.

Gemäß einem weiteren Aspekt ist ein selbstbegrenzendes Heizkabel für eine elektrische Flächenheizung beschrieben, welches aufweist: i) einen ersten Längenleiter und einen zweiten Längenleiter, welche jeweils einen ersten Widerstand aufweisen. Der erste Längenleiter und der zweite Längenleiter sind in dem selbstbegrenzenden Heizkabel im Wesentlichen parallel nebeneinander angeordnet, ii) ein selbstbegrenzendes Material, welches zwischen dem ersten Längenleiter und dem zweiten Längenleiter angeordnet ist, und welches einen zweiten Widerstand aufweist, welcher höher ist als der erste Widerstand, und welcher Temperatur-gekoppelt ist. Das selbstbegrenzende Heizkabel weist zumindest abschnittsweise einen Biegeradius auf, welcher das 30-fache (insbesondere das 20-fache, weiter insbesondere das 10-fache) oder weniger des größten Durchmessers des selbstbegrenzenden Heizkabels (im Querschnitt gesehen) ist. Zusätzlich oder alternativ ist das selbstbegrenzende Heizkabel zumindest abschnittsweise
um 90° (insbesondere 180°) oder mehr in zwei zueinander senkrecht orientierte Raumrichtungen (z.B. Höhenrichtung und Breitenrichtung des selbstbegrenzenden Heizkabels) (insbesondere ohne (wesentliche) Aufwölbung) biegbar.

Gemäß einem weiteren Aspekt ist ein Verfahren zum Herstellen eines selbstbegrenzenden Heizkabels für eine elektrische Flächenheizung (insbesondere ein selbstbegrenzendes Heizkabel wie oben beschrieben) ausgeführt. Das Verfahren weist auf: i) Anordnen von zwei Längenleitern, welche jeweils einen ersten Widerstand aufweisen, im Wesentlichen parallel nebeneinander, und ii) Bereitstellen eines selbstbegrenzenden Materials zwischen dem ersten Längenleiter und dem zweiten Längenleiter, welches einen zweiten Widerstand aufweist, welcher Temperatur-gekoppelt ist, und welcher höher ist als der erste Widerstand, derart, dass a) das selbstbegrenzende Heizkabel zumindest abschnittsweise einen Biegeradius aufweist, welcher das 30-fache (insbesondere das 20-fache, weiter insbesondere das 10-fache) oder weniger des größten Durchmessers des selbstbegrenzenden Heizkabels (im Querschnitt gesehen) ist, und/oder b) das selbstbegrenzende Heizkabel zumindest abschnittsweise um 90° (insbesondere 180°) oder mehr in zwei zueinander senkrecht orientierte Raumrichtungen (insbesondere ohne wesentliche Aufwölbung) biegbar ist.

Im Rahmen dieses Dokuments kann unter dem Begriff "elektrische Flächenheizung" (EFH) insbesondere eine Vorrichtung verstanden werden, welche Wärmeenergie abgibt, wenn ihr elektrische Energie zugeführt wird. Bevorzugt ist die EFH flächig ausgebildet, weist also zwei Haupterstreckungsrichtungen (Längenrichtung x und Breitenrichtung y) auf. Eine EFH kann ein Heizelement aufweisen, z.B. einen Heizdraht, ein Heizkabel, eine Heizfolie, oder eine Heizfläche. In einem einfachen Ausführungsbeispiel kann eine EFH durch einen flächig angeordneten Heizdraht realisiert werden, welcher von Strom durchflossen wird, so dass er sich erwärmt und entsprechend Wärme an die Umgebung abgibt. In einem weiteren Ausführungsbeispiel wird ein Heizkabel als Heizelement verwendet. Dieses kann an oder in einem Trägermaterial einer Trägerstruktur (beispielsweise einer Trägerfolie) angeordnet sein. In einem bevorzugten Beispiel kann ein Heizkabel, insbesondere in gebogener, weiter insbesondere mäandrierender Anordnung, in einem Trägermaterial angebracht oder in dem Trägermaterial eingebettet sein. Beispielsweise kann die Trägerstruktur als Folie ausgebildet sein, welche dann auf Rollen transportierbar ist. Zum Verlegen der EFH als Wand-, Decken- oder Bodenbelag können die Rollen dann ausgerollt und befestigt werden. In einem Ausführungsbeispiel kann die verlegte EFH mit einem Fussboden, z.B. Parkett, oder mit einer Tapete bedeckt werden. Insbesondere können elektrische Flächenheizungen im Baubereich, z.B. Hausbau und Gebäudebau, verwendet werden. In einem Beispiel umfasst der Begriff "Baubereich" keine Industrie oder Aviatik Anwendungen.

Im Rahmen dieses Dokuments kann unter dem Begriff "Trägerstruktur" eine flächige Struktur (z.B. in Form einer Folie) verstanden werden, welche geeignet ist als Träger für ein Heizelement (z.B. ein Heizkabel) zu fungieren. Die Trägerstruktur weist ein Trägermaterial auf, in welches ein Heizelement eingebettet werden kann und/oder auf/an welchem ein Heizelement angeordnet werden kann. Das Trägermaterial kann beispielsweise zumindest eines der folgenden Materialien aufweisen: i) geschnittene Styroporplatten (oder ähnliches Isoliermaterial), ii) isolierende Elastomerschäume (oder anorganische strukturierte Isolationsmaterialien als Untergrund) mit einer Einlege- oder Befestigungsmöglichkeit für das Heizelement, iii) Polymerklammern, welche entweder direkt am Boden montiert werden (analog Klammern von Warmwasserbodenheizungen), iv) flächige Kunststoff-Platten/-Folien, welche mittels eines Tiefziehprozesses derart strukturiert sind, dass sich Heizelemente einlegen lassen, v) Heatspreader (z.B. Aluminiumplatten, derart gebogen, dass Heizelemente eingelegt werden können). Ferner eignen sich z.B. folienartige und gitterartige Trägerstrukturen, auf denen ein Heizelement befestigt werden kann (und die allenfalls als Rollenware transportiert werden können).

Der Begriff "elektrisches Flächenheiz System" kann in diesem Zusammenhang ein System bezeichnen, welches neben der eigentlichen EFH weitere Komponenten aufweist, die mit der EFH assoziiert sein können. Dies sind beispielsweise Verlegehilfen, Heatspreader, mechanische Fixierungen, Steuerungssysteme, etc. Ferner können auch Komponenten der näheren Umgebung beinhaltet sein, z.B. bodenseitige Isolationen, elektrische Abschirmungen, Bodenbelag, Sensoren, Energiezuführung, etc.). Weiterhin kann das elektrische Flächenheiz System neben der EFH auch ein (nicht-transparentes) Abdeckmaterial aufweisen, welches die EFH (zumindest teilweise) bedeckt. Ferner kann ein elektrisches Flächenheizsystem ein Heizkomponente-assoziiertes Element aufweisen. Hierbei kann das Heizkomponente-assoziierte Element mit einer Heizkomponente der elektrischen Flächenheizung über ein Verbindungselement elektrisch leitfähig verbunden sein.

Der Begriff "Heizkomponente" kann sich im Rahmen dieses Dokuments insbesondere auf ein oder mehr Heizelemente und/oder ein oder mehr selbstbegrenzende Heizelemente beziehen. Eine Heizkomponente kann z.B. ein Heizkabel sein oder auch eine Gitterstruktur aus einer Mehrzahl von stabförmigen Heizelementen. Der Begriff "Heizelement" kann sich im Rahmen dieses Dokuments insbesondere auf ein Element beziehen, welches besonders dafür geeignet ist, bei elektrischer Energie-Zufuhr Wärme an die Umgebung abzugeben. Ein Heizelement kann z.B. einen Heizdraht, ein Heizkabel, eine Heizfolie, oder eine Heizfläche umfassen. Auch kann ein Heizelement z.B. durch eine Kupferbahn realisiert werden. Der Begriff "Heizkabel" kann sich in diesem Dokument auf ein Kabel beziehen, welches besonders dafür geeignet ist, Wärme an die Umgebung abzugeben, wenn Energie in Form von Strom zugeführt wird, bzw. wenn das Kabel elektrisch kontaktiert ist. Im Rahmen dieses Dokuments kann der Begriff "Heizkabel" auch Heizdrähte und Heizbänder umfassen. Eine Heizkomponente kann insbesondere mit einem Heizkomponente-assoziierten Element elektrisch leitfähig, insbesondere über ein Verbindungselement, verbunden werden.

Im Rahmen dieses Dokuments kann der Begriff "Heizkomponente-assoziiertes Element" jegliches Element bezeichnen, welches über eine elektrisch leitfähige Verbindung (z.B. ein Verbindungselement) mit einer Heizkomponente einer elektrischen Flächenheizung verbunden werden kann. Hierbei kann das Heizkomponente-assoziierte Element z.B. ein Versorgungsleiter, ein Stromkabel, ein Sensor, ein elektrischer Verbinder zu einer Steckdose und/oder einem Stromkasten, ein Steuerungsanschluss sein. Weiterhin kann das Heizkomponente-assoziiertes Element aber auch eine weitere Heizkomponente oder eine weitere elektrische Flächenheizung sein. Auch kann eine Flächenheizung ein erstes Flächenheiz-Modul sein und das Heizkomponente-assoziiertes Element kann ein zweites Flächenheiz-Modul sein, wobei beide Module über das Verbindungselement elektrisch leitfähig miteinander verbunden sind. Das Heizkomponente-assoziierte Element kann einen Längenleiter mit einem Anschluss aufweisen, wobei dieser Anschluss an einen Anschluss der Heizkomponente elektrisch angeschlossen werden kann. Insbesondere kann diese Verbindung innerhalb des Verbindungsbereichs eines Verbindungselements durchgeführt werden.

Im Rahmen dieses Dokuments kann der Begriff "Verbindungselement" insbesondere jegliches Element bezeichnen, welches geeignet ist, eine Heizkomponente einer elektrischen Flächenheizung und ein Heizkomponente-assoziiertes Element (bzw. deren Anschlussleiter) in einem Verbindungsbereich elektrisch leitfähig miteinander zu verbinden. Das Verbindungselement kann mit einer elektrischen Heizkomponente (z.B. ein Heizkabel, eine Heizfolie, etc.) der elektrischen Flächenheizung koppelbar (und/oder gekoppelt) sein. Zusätzlich oder alternativ kann das Verbindungselement mit einem Heizkomponente-assoziierten Element (z.B. eine Versorgungsleitung, ein Steueranschluss, ein (insbesondere mit einem Verbindungskabel angeschlossener) Sensor, eine weitere Heizkomponente, etc.) koppelbar (und/oder gekoppelt) (die Kopplung kann insbesondere ein (festes) Integrieren des Verbindungselements an/in die elektrische Heizkomponente und/oder an/in das Heizkomponente-assoziierte Element sein) sein. Das Verbindungselement kann einen Verbindungsbereich aufweisen, in welchem die elektrische Heizkomponente mit dem Heizkomponente-assoziierten Element in einem Verbindungszustand elektrisch leitfähig verbindbar ist. Das Verbindungselement kann eine Kavität aufweisen, welche mit dem Verbindungsbereich assoziiert ist (bzw. in/an dem Verbindungsbereich angeordnet ist) und in welche ein wasserdichtes Material (z.B. flüssig oder gelförmig) einbringbar ist (und/oder eingebracht ist). Weiterhin kann das Verbindungselement eine Begrenzungsstruktur (z.B. eine Außenhülle oder eine Box mit Deckel) aufweisen, welche eingerichtet ist die Kavität derart zu begrenzen, dass der Verbindungsbereich im Verbindungszustand wasserdicht (insbesondere tauchdicht) ist (insbesondere wobei die Begrenzungsstruktur das wasserdichte Material (z.B. als Gel) innerhalb der Kavität an die aneinander verbundenen Anschlüsse der Heizkomponente und dem Heizkomponente-assoziierten Element drückt). In einem anderen Beispiel kann das Verbindungselement eine Positionierstruktur (z.B. eine Verbindestruktur) aufweisen, welche eingerichtet ist a) den Verbindungszustand bereitzustellen, wenn ein Position-Sicherheitskriterium erfüllt ist, und b) den Verbindungszustand nicht bereitzustellen, wenn das Position-Sicherheitskriterium nicht erfüllt ist.

Im Rahmen dieses Dokuments kann der Begriff "Kabel" einen elektrisch leitfähigen Längenleiter (bzw. Versorgungsleiter) bezeichnen. Der Begriff "Kabel" kann eine Litze oder einen Volleiter bezeichnen. Insbesondere kann der elektrisch leitfähige Längenleiter zumindest teilweise mit einem Isoliermaterial umgeben sein. Ein Kabel kann sich in einer Längsrichtung x erstrecken und, im Querschnitt gesehen, eine Breitenrichtung y und eine Höhenrichtung z aufweisen. Bei einem Rundkabel können Breitenrichtung und Höhenrichtung im Wesentlichen gleich groß sein. Bei einem Flachband-Kabel kann die Breitenrichtung größer (insbesondere deutlich größer) als die Höhenrichtung sein.

Im Rahmen dieses Dokuments bezeichnet der Begriff "selbstbegrenzendes Heizkabel" (oder selbstregulierendes Kabel) eine besondere Ausführungsform eines Heizkabels (insbesondere schliesst der Begriff "selbstbegrenzendes Heizkabel" ein gewöhnliches Heizkabel aus). Der Begriff selbstbegrenzendes Heizkabel kann insbesondere ein Heizkabel mit gekoppelter und/oder integrierter Temperatursteuerung bezeichnen. Ein selbstbegrenzendes Heizkabel kann derart konfiguriert sein, dass die Erwärmung ab einer bestimmten Temperatur reduziert wird oder ganz abschaltet. Die Selbstbegrenzung kann in einem Beispiel also absolut sein während die Selbstbegrenzung in einem anderen Beispiel nicht absolut ist (z.B. ist die Selbstbegrenzung derart, dass die Temperatur nur noch sehr wenig weiter ansteigt). Ein selbstregulierendes Heizkabel besteht bevorzugt aus zwei im Wesentlichen parallelen Längenleitern (Versorgungsleitern) bzw. Heizdrähten, welche in ein selbstbegrenzendes Material eingebettet sind. In einem Ausführungsbeispiel weist das selbstbegrenzende Material einen vernetzten und mit Kohlenstoffteilchen dotierten Kunststoff auf. Steigt die Temperatur im Betrieb, so dehnt sich der Kunststoff durch molekulare Expansion aus, und die Abstände zwischen den Kohlenstoffteilchen vergrößern sich. Der Widerstand im Kabel steigt, und die Wärmeproduktion des Kabels sinkt. Bei Abkühlung kehrt sich dieser Prozess um, und die Wärmeproduktion steigt wieder. In einem weiteren Beispiel wird ein selbstbegrenzendes Material mit einem hohen PTC (positive temperature coefficient) Widerstand (z.B. polykristalline Keramik) verwendet. Prinzipiell können Materialien mit einem (fast) sprunghaft ansteigenden Widerstand bei einer Grenztemperatur als selbstbegrenzendes Material geeignet sein.

Gemäß einem exemplarischen Ausführungsbeispiel basiert die Erfindung auf der Idee, dass eine zuverlässige (insbesondere sichere) und zugleich besonders flexibel und platzsparend verlegbare elektrische Flächenheizung bereitgestellt werden kann, wenn ein selbstbegrenzendes Heizkabel (welches für Sicherheit und Zuverlässigkeit sorgt) in Höhen-angepasster Weise derart in der Trägerstruktur der elektrischen Flächenheizung vorgesehen wird (z.B. angeordnet an oder eingebettet in), dass die Höhe des selbstbegrenzenden Heizkabels (und damit auch die Höhe der elektrischen Flächenheizung) nicht mehr als 15 mm (insbesondere 10 mm, weiter insbesondere 5 mm) beträgt.

Einer der Hauptvorteile einer elektrischen Flächenheizung ist die sehr niedrige Aufbauhöhe im unteren Millimeterbereich. Bei Einsatz von selbstbegrenzenden Heizkabeln wird diese Aufbauhöhe jedoch deutlich vergrößert, weil das vertikal ausgerichtete (stehende) selbstbegrenzende Flachband-Heizkabel in Höhenrichtung viel Platz (bzw. eine hohe Ausdehnung) benötigt (siehe Diskussion oben).

Es wurde nun überraschend erkannt, dass eine elektrische Flächenheizung mit einem Höhen-angepassten selbstbegrenzenden Heizkabel ebenso zuverlässig und sicher funktioniert, aber den entscheidenden Vorteil bietet, dass die elektrische Flächenheizung dennoch besonders dünn ist und damit ein flexibles und platzsparendes Verlegen ermöglicht ist. Es ist nun also ermöglicht, eine elektrische Flächenheizung mit einem sehr dünnen Aufbau breitzustellen und dennoch ein vorteilhaftes selbstbegrenzendes Heizkabel anzuwenden.

Im Folgenden werden exemplarische Ausführungsbeispiele der Erfindung beschrieben.

Gemäß einem Ausführungsbeispiel ist die Höhe des gebogenen Abschnitts des selbstbegrenzenden Heizkabels 10 mm oder weniger (weiter insbesondere 8 mm oder weniger, weiter insbesondere 5 mm oder weniger). Dies hat den Vorteil, dass eine besonders dünne (und dadurch auch besonders flexibel und robust zu verlegende) elektrische Flächenheizung bereitgestellt ist, die dennoch das vorteilhafte Verwenden eines selbstbegrenzenden Heizkabels (und die damit verbundene Sicherheit) ermöglicht.

Erfindungsgemäß weist das selbstbegrenzende Heizkabel zumindest abschnittsweise einen Biegeradius auf, welcher das 30-fache (insbesondere das 20-fache, weiter insbesondere das 10-fache, weiter insbesondere das 5-fache) oder weniger des größten Durchmessers (insbesondere Breitenrichtung und/oder Höhenrichtung) des selbstbegrenzenden Heizkabels, im Querschnitt gesehen, ist. Dies hat den Vorteil, dass ein besonders biegbares selbstbegrenzendes Heizkabel flexibel und platzsparend in einer elektrischen Flächenheizung verbaut werden kann.

Der Begriff "Biegeradius" kann in diesem Rahmen insbesondere den Radius bezeichnen, mit dem ein Kabel gebogen werden kann, ohne es zu beschädigen (einschließlich Knicken bzw. Aufwölben). Je kleiner der Biegeradius ist, desto größer ist die entsprechende Flexibilität des Kabels bzw. Materials (zumindest abschnittsweise). Beträgt der Durchmesser eines Rundkabels z.B. 1 cm, so wäre sein Biegeradius in einem besonders bevorzugten Ausführungsbeispiel das 10-fache, also 10 cm, oder weniger.

Erfindungsgemäß ist das selbstbegrenzende Heizkabel zumindest abschnittsweise um 90° (insbesondere 180°) oder mehr in den Haupterstreckungsrichtungen (insbesondere der Längenrichtung x und der Breitenrichtung y) und/oder der Höhenrichtung (z) (insbesondere ohne Aufwölbung) biegbar. Dies hat ebenfalls den Vorteil, dass ein besonders biegbares selbstbegrenzendes Heizkabel flexibel und platzsparend in einer elektrischen Flächenheizung verbaut werden kann.

Mittels dieser Ausgestaltung wird ein effizientes Verlegen des selbstbegrenzenden Heizkabels bzw. der elektrischen Flächenheizung ermöglicht, denn das selbstbegrenzende Heizkabel kann innerhalb der Trägerebene der elektrischen Flächenheizung (ohne dabei deren Höhe zu vergrößern) flexibel gebogen und verlegt werden.

Gemäß einem weiteren Ausführungsbeispiel weist das selbstbegrenzende Heizkabel auf: i) einen ersten Bereich (welcher insbesondere zum Heizen eingerichtet ist) und eine erste Biegeeigenschaft (z.B. Flexibilität, Elastizität) aufweist, und ii) einen zweiten Bereich (welcher insbesondere nicht zum Heizen eingerichtet ist) und eine zweite Biegeeigenschaft aufweist. Die erste Biegeeigenschaft und die zweite Biegeeigenschaft sind voneinander verschieden. Insbesondere weist die zweite Biegeeigenschaft eine höhere Elastizität (z.B. bezüglich E-Modul) auf als die erste Biegeeigenschaft.

In einem Ausführungsbeispiel werden abwechslungsweise (Wechselfolgen) der erste Bereich und der zweite Bereich in der Kabelherstellung in Längsrichtung bereitgestellt. Dabei entspricht der erste Bereich einer Ausgestaltung wie ein übliches (selbstbegrenzendes) Heizkabel. Der zweite Bereich wiederum hat keine oder eine reduzierte Heizleistung, erlaubt aber eine hohe Flexibilität, wie z.B. eine vorwiegend aufwölbungsfreie Biegung (z.B. um 180°).

Gemäß einem weiteren Ausführungsbeispiel weist das selbstbegrenzende Heizkabel eine wasserdichte (insbesondere tauchdichte, bzw. zum Eintauchen in Wasser geeignete) Isolierschicht auf. Dadurch kann sich der Vorteil ergeben, dass die elektrische Flächenheizung auch unter schwierigen Verlegebedingungen sicher und zuverlässig bleibt.

Im Rahmen dieses Dokuments kann der Begriff "wasserdichtes Material" ein Material bezeichnen, welches eine wasserdichte Isolationseigenschaft aufweist. Ist z.B. eine elektrische Verbindung zwischen zwei Anschlüssen von dem wasserdichten Material fest umgeben (bzw. von diesem isoliert), so kann Wasser nicht zu der elektrischen Verbindung durchdringen. Als wasserdichtes Material können insbesondere Materialien zur Abdichtung, zur Wasserverdrängung, zur Feuchtigkeitsisolation, mit Korrosionsschutzfunktion für elektrische Leiter, mit Sauerstoff und/oder Wasser(dampf)-(Diffusion)-Sperrfunktion (bezüglich Korrosion), zum Korrosionsschutz eines unterliegenden (Kupfer-) Leiters (z.B. durch eine Komponente, die wie chemisches Verzinnen funktioniert), zur Reduktion von biologischem Wachstum (Biofilm-Bildung) verstanden werden. Das wasserdichte Material kann bevorzugt flüssig oder gelförmig (bei Raumtemperatur) sein. Weiterhin kann das Material z.B. ein Kunststoff, insbesondere ein Kunstharz, oder Silikon sein. Ferner kann das wasserdichte Material aus zumindest zwei Materialkomponenten bestehen, welche erst bei einem Mischen das wasserdichte Material ergeben. Hierbei kann unter dem Begriff "wasserdicht" z.B. eine Dichtheit nach IP (international protection) 65 verstanden werden, während unter dem Begriff "tauchfest" eine Dichtheit nach IP 68 bis 1 m Wassertiefe verstanden werden kann.

Durch die Umhüllung des Heizkabels mit einem wasserdichten Isoliermaterial kann für das zugehörige elektrische System (elektrisches Flächenheizung System) eine Wasserdichtheit und auch eine Tauchfestigkeit erreicht werden. Durch die Wahl von geeigneten Isolationsmaterialien (z.B. Polyurethane) kann auch eine genügende Feuchtigkeitsisolation für permanentes Eintauchen in Wasser realisiert werden. Dies kann bei Montagearten von Vorteil sein, welche das Risiko von erhöhter Feuchtigkeit mit sich bringen, weil dadurch die niederohmigen Längenleiter weniger einer Langzeitkorrosion ausgesetzt sind. In einem Ausführungsbeispiel kann die Isolierschicht auch ein Gel aufweisen.

Gemäß einem weiteren Ausführungsbeispiel weist das selbstbegrenzende Heizkabel eine elektrisch isolierende Schicht (zumindest teilweise um das selbstbegrenzende Material herum) auf. Insbesondere weist die elektrisch isolierende Schicht ein elektrisch isolierendes Material mit hoher Wärmeleitfähigkeit auf. Das isolierende Material kann ein keramisches Material, z.B. Aluminiumhydroxid, sein. Dies kann den Vorteil haben, dass eine besonders effiziente Wärmeverteilung ermöglicht ist, auch wenn z.B. der Durchmesser eines selbstbegrenzenden Heizkabels reduziert wird.

Beispielsweise in eine Isolation (bzw. Isolationsschicht) des Heizkabels kann ein Material eingearbeitet sein, welches eine sehr hohe Wärmeleitfähigkeit aufweist, aber doch isolierend ist. Es hat sich gezeigt, dass insbesondere Verwendung von keramischen Füllern oder metallischen Anteilen sehr gut geeignet sind (z.B. Aluminiumhydroxid) um trotz reduziertem Durchmesser eine grosse Wärmemenge in das umgebende System zu transportieren. Wenn dieses in Kontakt mit einem System mit hoher Wärmeverteilung gebracht wird, kann so eine effiziente Wärmeausbreitung in der Trägerebene der elektrischen Flächenheizung erreicht werden.

Gemäß einem weiteren Ausführungsbeispiel weist das selbstbegrenzende Heizkabel eine elektrisch leitfähige Schicht (Abschirmschicht) auf. Diese ist insbesondere mit einem zusätzlichen Außenmantel (z.B. bekanntes elektrisch isolierendes Material) isoliert. Weiter insbesondere weist die elektrisch leitfähige Schicht einen Schutzleiter auf. Dies kann den Vorteil haben, dass zugleich die Elastizität verbessert werden kann und ein elektrischer Schutz vorgesehen wird.

In einem Ausführungsbeispiel wird ein selbstbegrenzendes Heizkabel mit einer äusseren Abschirmschicht versehen, welche auf Systemerde geschaltet werden kann und so mittels eines FI (Fehlerstrom Schutzschalter) eine Schnellabschaltung des Systems erlaubt, für den Fall einer Perforation des Kabels (z.B. durch Nägel oder Bohrer). Eine geeignet gestaltete leitende Hülle kann neben der Sicherheitsfunktion auch eine zusätzliche Steuerung der Elastizität (bzw. je nach Bauart des Kabels eine Homogenisierung der Elastizität) bewirken, so dass ein Aufwölben zusätzlich reduziert werden kann. In einem Beispiel wird die Abschirmschicht feindrahtig gewoben, analog eines runden abgeschirmten Flachbandkabels. In einem exemplarischen Ausführungsbeispiel ist die Abschirmschicht ein Kupfer verzinntes Schutzgeflecht und in einem anderen exemplarischen Ausführungsbeispiel ist die Abschirmschicht eine Aluminium-Schutzfolie mit einem Kupfer-verzinnten Schutzleiter.

Gemäß einem weiteren Ausführungsbeispiel ist das selbstbegrenzende Heizkabel konfiguriert bei einer Temperaturerhöhung (insbesondere auf 30° C oder mehr, weiter insbesondere auf 50° C oder mehr) eine Veränderung einer Biegeeigenschaft bereitzustellen. Dies hat den Vorteil, dass die Biegbarkeit (Flexibilität) des selbstbegrenzende Heizkabel weiter erhöht werden kann.

In einem weiteren Ausführungsbeispiel wird das selbstbegrenzende Heizkabel für die Biegung erwärmt. Durch den Einsatz von Kunststoffen, welche eine leichtere Verformbarkeit bei höheren Temperaturen erlauben (ohne Formverlust der Kabelgeometrie) kann es zusätzlich möglich sein, den wölbungsfeien Biegeprozess zu unterstützen.

Gemäß einem weiteren Ausführungsbeispiel ist das selbstbegrenzende Heizkabel als Rundkabel ausgestaltet. Dies hat den Vorteil, dass ein selbstbegrenzendes Heizkabel bereitgestellt ist, welches in allen Raumrichtungen besonders bevorzugte Biegeneigenschaften aufweist und entsprechend flexibel verbaut werden kann.

Erfindungsgemäß weist das selbstbegrenzende Heizkabel auf: i) einen ersten Längenleiter und einen zweiten Längenleiter, welche jeweils einen ersten Widerstand aufweisen, wobei der erste Längenleiter und der zweite Längenleiter in dem selbstbegrenzenden Heizkabel (im Wesentlichen) parallel nebeneinander angeordnet sind, und ii) ein selbstbegrenzendes Material, welches zwischen dem ersten Längenleiter und dem zweiten Längenleiter angeordnet ist, und welches einen zweiten Widerstand aufweist, welcher höher ist als der erste Widerstand, und welcher Temperatur-gekoppelt ist. Dies kann den Vorteil haben, dass ein bekanntes selbstbegrenzende Heizkabel Konzept, mit entsprechender Höhen-Anpassung, direkt implementiert werden kann.

Gemäß einem weiteren Ausführungsbeispiel ist das selbstbegrenzende Material derart konfiguriert, dass der zweite Widerstand bei steigender Temperatur des selbstbegrenzenden Heizkabels durch die Temperatur-Kopplung ansteigt, und dass dadurch eine selbstbegrenzte Maximaltemperatur vorgegeben ist. Dies hat den Vorteil, dass eine besonders sichere und zuverlässige elektrische Flächenheizung bereitgestellt werden kann.

In einer erfindungsgemäßem Alternative weist der erste und/oder der zweite Längenleiter in der Breitenrichtung (y) eine erste Ausdehnung auf und in der Höhenrichtung (z) eine zweite Ausdehnung auf, wobei die erste Ausdehnung von der zweiten Ausdehnung verschieden ist, wobei die zweite Ausdehnung größer ist als die erste Ausdehnung. Dadurch kann das selbstbegrenzende Heizkabel mit der erwünschten Biegeeigenschaft Höhen-angepasst werden.

In einem Beispiel hat der niederohmige Längenleiter eine vertikale Ausdehnung größer oder deutlich größer seine horizontale Ausdehnung. Dadurch kann das selbstbegrenzende Heizkabel z.B. in einer zumindest annährend runden Form bereitgestellt werden.

In einer weiteren erfindungsgemäßen Alternative ist das selbstbegrenzende Material, in einem Querschnitt des selbstbegrenzenden Heizkabels gesehen, (im Wesentlichen) kreisförmig ausgebildet. Dadurch kann das selbstbegrenzende Heizkabel mit der erwünschten Biegeeigenschaft Höhen-angepasst werden.

In einem Beispiel wird das selbstbegrenzende Heizkabel koaxial aufgebaut. Dies dahingehend, dass ein innerer Kern aus Isolationsmaterial besteht, und oberhalb/unterhalb des Kerns wird jeweils ein Längenleiter angeordnet. Dazwischen wird das Kreisrund des Kerns mit selbstbegrenzenden Material aufgefüllt (und insbesondere eine Aussenisolation hinzugefügt).

In einer weiteren erfindungsgemäßen Alternative liegt das selbstbegrenzende Material gebogen vor. Insbesondere liegt das selbstbegrenzende Material Schlaufen-förmig vor. Weiter insbesondere ist zusätzliches isolierendes Material innerhalb der Schlaufen-Form angeordnet. Dies ermöglicht es, das selbstbegrenzende Heizkabel mit der erwünschten Biegeeigenschaft Höhenanzupassen.

In einem Beispiel findet ein Umformen des selbstbegrenzenden Materials statt, z.B. in Annährung zu einem Rundkabel und/oder Mäandrierung, (Mikro-) Schlaufenbilden, usw.

Beispielsweise durch das folgende Vorgehen: flächiges Ausgestalten eines selbstbegrenzenden Heizkabels analog dem Stand der Technik, allenfalls noch breiter als bisher üblich, versehen mit einer äusseren Isolation. Im Rahmen der weiteren Kabelfertigung kann eine Schlaufenbildung mit zusätzlich eingeschobener Isolation (bzw. Isolationsmaterial) während der Fertigung stattfinden. Das Isolationsmaterial kann identisch mit dem bisherigen Isolationsmaterial von selbstbegrenzendem Material sein. Das Einschieben kann eine Form von Umformung sein und insbesondere zu einem Zeitpunkt stattfinden, wenn das selbstbegrenzende Material leicht verformbar ist.

Insbesondere kann in dieser Ausführungsvariante das selbstbegrenzende Heizkabel in einer Spiralform vorliegen, welche bei der Verlegung nur noch um einen bestimmten Betrag geöffnet werden muss. Dies ist insbesondere deshalb günstig, weil bei beschriebenem Aufbau das innere Ende der Spirale nirgends angeschlossen werden muss und die Spirale an ihrem Aussenanschluss bestromt werden kann.

Gemäß einem weiteren Ausführungsbeispiel ist die Ausdehnung des selbstbegrenzenden Materials zwischen dem ersten Längenleiter und dem zweiten Längenleiter (in einem Querschnitt des selbstbegrenzenden Heizkabels gesehen) größer ist als die Distanz zwischen dem ersten Längenleiter und dem zweiten Längenleiter. In einer weiteren erfindungsgemäßen Alternative ist das selbstbegrenzende Material (in einem Querschnitt des selbstbegrenzenden Heizkabels gesehen) zwischen dem ersten Längenleiter und dem zweiten Längenleiter im Wesentlichen wellenförmig oder C-förmig (weiter insbesondere zumindest annährend Kreis-förmig) angeordnet. Dadurch kann das selbstbegrenzende Heizkabel mit der erwünschten Biegeeigenschaft Höhen-angepasst werden.

Eine Ausführungsbeispiel stellt weitere Faltungen des selbstbegrenzenden Heizkabels bereit, so zum Beispiel eine C-förmige oder halbmondförmige (eine möglichst zentral verlaufende doppelte Längenleiterlage, was bildlich gesprochen einer fast geschlossenen Mondsichel entspricht) Ausgestaltung.

Gemäß einem weiteren Ausführungsbeispiel weist die elektrische Flächenheizung ferner auf: i) einen Heizbereich, in welchem der gebogene Abschnitt des selbstbegrenzenden Heizkabels angeordnet ist, und ii) einen Freibereich, in welchem der gebogene Abschnitt des selbstbegrenzenden Heizkabels nicht angeordnet ist. Dies kann den Vorteil haben, dass Freihaltezonen vorhanden sind, welche eine spätere Bearbeitung, insbesondere Durchbohrung, zulassen.

In einem Ausführungsbeispiel ist ein Freibereich über (zusätzliche Registrierungspunkte) erfassbar, welche es ermöglichen, ohne Sichtkontakt zum Heizsystem die Position dieser Freihaltezonen zu bestimmen. Dieser Registrierungsmechanismus (z.B. über Bereichsmarker) kann es erlauben, auch bei vollständiger Bedeckung mit Baumaterialien nach dem Verlegen noch gefahrlos Durchdringungen herzustellen. Bei einer derart konstruierten elektrischen Flächenheizung kann es ermöglicht sein, nach dem Einbau in ein Bauwerk (vorgeplante) Freibereiche von sensiblen Heizbereichen mit stromführenden Heizkomponenten zu unterscheiden. Dies kann eine flexible und sichere spätere Montage von Objekten an Böden, Wänden, Decken (z.B. durch Anbohren) bei späteren Um- und Weiterbauten erlauben.

In einem Ausführungsbeispiel wird zumindest eines von dem selbstbegrenzenden und dem unbegrenzten Heizelement durch Heizfolien realisiert. Dabei stellt sich das Problem der späteren Durchbohrbarkeit dieser Baugruppe. Da insbesondere Heizsysteme bevorzugt grossflächig realisiert werden, kann sich diese Problematik verschärfen. Eine Lösung dieser Problematik kann durch regelmässige Aussparungen der Heizfolie und deren Verbindungselementen erreicht werden. Durch einzelne Registrierungspunkte, welche bezüglich ihrer Position durch einen fertigen Oberflächenaufbau hindurch detektiert werden können (z.B. magnetisch, kapazitiv, induktiv, usw.), kann es möglich sein die Orte der Freilassungen festzustellen und an den geeigneten Orten Löcher (für Wandkasten, Armaturen, Bodenprofile von Leichtbauwänden, usw.) zu bohren, ohne das EFH System zu beschädigen.

Der Begriff "Heizbereich" kann sich im Rahmen dieses Dokuments insbesondere auf einen Bereich innerhalb einer elektrischen Flächenheizung beziehen, welcher eine elektrische Heizkomponente aufweist und daher nicht dazu geeignet ist bearbeitet (insbesondere durchbohrt) zu werden. In einem Beispiel eines Heizbereichs ist in einer Trägerstruktur der elektrischen Flächenheizung ein Heizkabel eingebettet. In dem Heizbereich kann die Wahrscheinlichkeit deutlich erhöht sein, bei einem Bohren durch nicht-transparentes Abdeckmaterial und den darunterliegenden Heizbereich (z.B. durch die Trägerstruktur der elektrischen Flächenheizung), die Heizkomponente (z.B. das Heizkabel, die Heizfolie) und/oder deren Isolierung zu beschädigen (oder zu durchbohren). Diese Wahrscheinlichkeit kann in dem Heizbereich derart erhöht sein, dass ein Fachmann von dem Durchbohren abrät, weil die Gefahr einer Beschädigung zu gross ist. Der Begriff "Heizbereich" bezeichnet in einem Beispiel nicht nur die Heizkomponente selbst, sondern auch den umliegenden Bereich um die Heizkomponente herum, in welchem ein Bearbeiten bzw. ein Durchbohren generell nicht durchgeführt werden würde, weil eben die Sicherheit gefährdet ist. In einem Beispiel wird der Heizbereich einer elektrischen Flächenheizung definiert bzw. dokumentiert. Ferner kann der Heizbereich mit den Bereichspositionen von Bereichsmarkern assoziiert sein.

Der Begriff "Freibereich" kann sich im Rahmen dieses Dokuments insbesondere auf einen Bereich innerhalb einer elektrischen Flächenheizung beziehen, welcher keine elektrische Heizkomponente aufweist und daher dazu geeignet ist bearbeitet (insbesondere durchbohrt) zu werden. In einem Beispiel eines Freibereichs ist in einem Bereich der Trägerstruktur der elektrischen Flächenheizung kein Heizkabel eingebettet. In einem anderen Beispiel weist eine Heizfolie Freibereiche ohne Heizfunktion auf. In einem weiteren Beispiel werden Heizfolien-Abschnitte als Heizbereiche verwendet, zwischen welchen dann Freibereiche gelassen werden. Der Freibereich kann entsprechende Ausmasse aufweisen, so dass ein Bohren durch nicht-transparentes Abdeckmaterial und den darunterliegenden Freibereich gefahrlos ermöglicht ist. Die Größe des Freibereichs kann hierbei derart gewählt sein, dass die Wahrscheinlichkeit den Freibereich bei einem Bohren zu verfehlen, vernachlässigbar gering wird.

Gemäß einem weiteren Ausführungsbeispiel weist die elektrische Flächenheizung ferner auf: i) ein erstes Flächenheizmodul, ii) ein zweites Flächenheizmodul, und iii) einen Verbinder (bzw. ein Verbindungselement), welcher das erste Flächenheizmodul und das zweite Flächenheizmodul miteinander verbindet, insbesondere wobei zumindest eines der Flächenheizmodule 10 dm², insbesondere 25 dm², weiter insbesondere 50 dm², oder grösser ist. Dies hat den Vorteil, dass eine elektrische Flächenheizung flexibel und mit vorteilhaften zusätzlichen Funktionalitäten aufgebaut werden kann.

In einem Ausführungsbeispiel besteht eine elektrische Flächenheizung bzw. ein elektrisches Flächenheiz System aus einzelnen Flächenheizmodulen, welche mittels Verbindungselementen untereinander verbunden werden können. Die entsprechende Sicherstellung der Position bei Verbindungserstellung lässt sich durch die beschriebenen Verbindungselemente erreichen, wobei die Verbinder in diesem Fall bereits Teil des nächsten Moduls sein können.

In einem Beispiel kann ein Flächenheizmodul zusätzliche Funktionalitäten integriert haben, wie z.B. eine Isolation (insbesondere schaumbasierend) zum Boden, zur Wand oder zur Decke hin. Durch diese zusätzliche Dicke entsteht eine gewisse Verbiegungssteifheit, welche, aufgrund der so entstehenden Paneele, die Montage erleichtert. In einem Beispiel kann ein Teil der erhöhten Positionierungssicherheit bei einem Modulsystem durch einen Mechanismus von Nut und Feder, insbesondere im Bereich der Isolation, hergestellt werden. Die Module können ausgelegt und miteinander verbunden werden. Die Module können weitere Baustoffe, wie Isolierung, Trittfestigkeitsschutz (während der Bauzeit) oder Trag-/Montagehilfsmittel aufweisen. In einem Beispiel können fertige Installationsmodule (insbesondere mit einer Isolation aus Styropor nach unten) mittels der Verbindungselemente verbunden werden.

Gemäß einem weiteren Ausführungsbeispiel weist die elektrische Flächenheizung ferner auf: zumindest zwei Temperatur-begrenzende Zonen, insbesondere wobei zumindest eine der Temperatur-begrenzenden Zonen 25 dm², insbesondere 10 dm², weiter insbesondere 2 dm², oder kleiner ist.

In einem Beispiel werden Zonen (zur selbständigen Abregelung) mit limitierter Fläche vorgesehen, welche in der Mehrzahl mittels eines Temperaturbegrenzung Mechanismus ausgestattet sind. Dabei wurden gute Ergebnisse erzielt, wenn solche Zonen kleiner 25 dm², bevorzugt kleiner 10 dm², besonders bevorzugt kleiner 2 dm², sind.

Diese Quadratdezimeter Maße können für die angedachten einzeln gesteuerten Temperatur-begrenzende Zonen z.B. als Ersatz für selbstbegrenzende Heizelemente verwendet werden. Das Energie-bezogene Reduzieren und/oder Abschalten kann z.B. mittels Thermostaten als Temperatur-begrenzende Zonen Elemente realisiert werden, welche bei einer Grenztemperatur die Stromzufuhr zur Beheizung eines (örtlich) naheliegenden Flächenteils (bzw. Temperatur-begrenzende Zone) reduzieren oder abschalten, dies insbesondere bei Zonen kleiner 25 dm². In einem Beispiel werden die Zonen durch eine Gitterstruktur aus Heizelementen definiert, wobei entlang der Heizelemente Temperatur-begrenzende Zonen Elemente angeordnet sein können.

Gemäß einem weiteren Ausführungsbeispiel ist der Durchmesser des selbstbegrenzenden Heizkabels in der Höhenrichtung (z) gleich oder geringer als der Durchmesser in einer Breitenrichtung (y), welche durch die im Wesentlichen parallel nebeneinander angeordneten Längenleiter definiert ist. Erfindungsgemäß weist das Verfahren ferner auf: Bearbeiten des selbstbegrenzenden Heizkabels (insbesondere von selbstbegrenzendem Material des selbstbegrenzenden Heizkabels). Insbesondere Bearbeiten derart, dass das selbstbegrenzende Material im Wesentlichen Schlaufen-förmig vorliegt. Bevorzugt weist das Bearbeiten zumindest eines aus der Gruppe auf, welche besteht aus: Falten, Rollen, Umformen (insbesondere in noch nicht festem Endzustand). Dies hat den Vorteil, dass ein selbstbegrenzendes Heizkabel mit den bevorzugen Biegeeigenschaften bzw. der bevorzugten Höhe auf mechanische Weise aus etablierten Materialien hergestellt werden kann.

Gemäß einem weiteren Ausführungsbeispiel weist das Verfahren ferner auf: elektrisches Verbinden eines ersten Flächenheizmoduls und eines zweiten Flächenheizmoduls miteinander über einen Verbinder, wobei das elektrische Verbinden durch zumindest eines aus der Gruppe durchgeführt wird, welche besteht aus: Schneidklemmen, Crimpen, Stecken, Klemmen, Anpressen, Kleben, Schweissen, insbesondere Ultraschallschweissen oder Kaltverschweissen, Nieten, Clinchen, Schrauben, Löten. Dies hat den Vorteil, dass eine elektrische Flächenheizung flexibel und mit vorteilhaften zusätzlichen Funktionalitäten mittels etablierter Verfahren aufgebaut werden kann.

Gemäß einem weiteren Ausführungsbeispiel weist das Verfahren ferner auf: i) Bereitstellen eines selbstbegrenzenden Flachband-Heizkabels, ii) Bearbeiten des selbstbegrenzenden Flachband-Heizkabels, insbesondere derart, dass ein selbstbegrenzendes Heizkabel (im Wesentlichen bzw. annährend) als Rundkabel vorliegt. Dies hat den Vorteil, dass ein konventionelles selbstbegrenzendes Flachband-Heizkabel als Ausgangsmaterial für ein Umformen dienen kann, welches in einem selbstbegrenzenden Heizkabel mit überraschend vorteilhaften Eigenschaften resultiert.

In einem Beispiel wird der flächige Aufbau eines selbstbegrenzenden Heizkabels derart umstrukturiert, dass es sich beim Biegen um die zueinander senkrecht stehenden Biegeachsen ähnlich verhält und so keine relevante Aufwölbung beim Einsatz in einer elektrischen Flächenheizung entsteht.

Im Folgenden werden exemplarische Ausführungsbeispiele der vorliegenden Erfindung mit Verweis auf die folgenden Figuren detailliert beschrieben.
Figur 1 zeigt eine Draufsicht einer elektrischen Flächenheizung gemäß einem Ausführungsbeispiel der Erfindung.
Figur 2 zeigt einen Querschnitt durch eine elektrische Flächenheizung gemäß einem Ausführungsbeispiel der Erfindung.
Figuren 3 bis 8 zeigen jeweils einen Querschnitt durch ein selbstbegrenzendes Heizkabels gemäß Ausführungsbeispielen der Erfindung.
Figur 9 zeigt Verlegemuster einer elektrischen Flächenheizung gemäß Ausführungsbeispielen der Erfindung.
Figur 10 zeigt ein selbstbegrenzendes Heizkabels gemäß einem Ausführungsbeispiel der Erfindung.
Figur 11 zeigt ein selbstbegrenzendes Heizkabel in Form eines Flachband-Heizkabels gemäß dem Stand der Technik.
Figur 12 zeigt eine elektrische Flächenheizung mit einem vertikal (senkrecht) ausgerichteten selbstbegrenzenden Heizkabel in Form eines Flachband-Heizkabels gemäß dem Stand der Technik.

Gleiche oder ähnliche Komponenten in unterschiedlichen Figuren sind mit gleichen Bezugsziffern versehen.

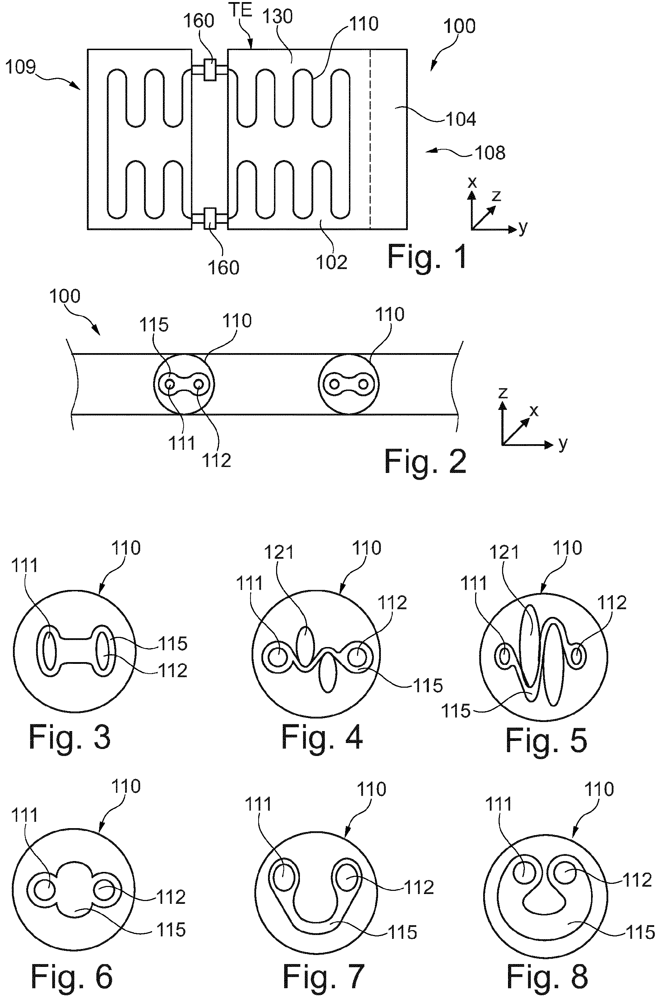

**Figur 1** zeigt eine Draufsicht einer elektrischen Flächenheizung 100 zum Verlegen im Baubereich gemäß einem Ausführungsbeispiel der Erfindung. Die elektrische Flächenheizung weist ein selbstbegrenzendes Heizkabel 110 und eine Trägerstruktur 130 auf, welche entlang zweier Haupterstreckungsrichtungen x, y ausgebildet ist und dabei eine Trägerebene TE aufspannt. Das selbstbegrenzende Heizkabel 110 ist in Trägermaterial der Trägerstruktur 130, welche als Trägerfolie ausgestaltet ist, gebogen (mäandrierend) angeordnet bzw. eingebettet. Die elektrische Flächenheizung 100 weist ferner auf: einen Heizbereich 102, in welchem das gebogene selbstbegrenzende Heizkabel 110 angeordnet ist, und einen Freibereich 104, in welchem das selbstbegrenzende Heizkabel 110 nicht angeordnet ist. Letzterer dient hierfür als Freihaltezone, um beispielsweise Bohrungen durchzuführen, wenn die elektrische Flächenheizung 100 von einem Boden oder einer Tapete überdeckt wird und nicht mehr sichtbar ist. Die elektrische Flächenheizung 100 weist ein erstes Flächenheizmodul 108 und ein zweites Flächenheizmodul 109, welche über Verbinder 160 miteinander verbunden sind.

Die Höhe des selbstbegrenzenden Heizkabels 110 beträgt nicht mehr als 15 mm (also keine Ausgestaltung als Flachband-Heizkabel) und das selbstbegrenzende Heizkabel 110 weist dennoch einen Biegeradius auf, welcher weniger als das 30-fache (insbesondere das 10-fache) des größten Durchmessers des selbstbegrenzenden Heizkabels 110 (im Querschnitt gesehen, also entlang y oder z) ist. Zudem ist das selbstbegrenzende Heizkabel 110 zumindest um 180° oder mehr in den Haupterstreckungsrichtungen (x, y) und/oder der Höhenrichtung (z) ohne Aufwölbung biegbar.

**Figur 2** zeigt einen Querschnitt durch eine elektrische Flächenheizung 100 gemäß einem Ausführungsbeispiel der Erfindung. Die Höhe des gebogenen selbstbegrenzenden Heizkabels 110 beträgt in der Höhenrichtung z, welche senkrecht zu den zwei Haupterstreckungsrichtungen x, y der elektrischen Flächenheizung 100 orientiert ist, lediglich 15 mm (insbesondere 10 mm, weiter insbesondere 5 mm). Entsprechend dünn kann dadurch auch die elektrische Flächenheizung 100 ausgestaltet werden. In dem gezeigten Ausführungsbeispiel wird dies dadurch ermöglicht, dass das selbstbegrenzende Heizkabel 110 als Rundkabel ausgestaltet ist. Das selbstbegrenzende Heizkabel 110 weist einen ersten Längenleiter 111 und einen zweiten Längenleiter 112 auf, welche jeweils einen ersten Widerstand aufweisen. Der erste Längenleiter 111 und der zweite Längenleiter 112 sind in dem selbstbegrenzenden Heizkabel 110 parallel nebeneinander angeordnet und bilden dadurch eine Breitenrichtung y aus. Das selbstbegrenzende Heizkabel 110 weist zudem ein selbstbegrenzendes Material 115 auf, welches zwischen dem ersten Längenleiter 111 und dem zweiten Längenleiter 112 angeordnet ist, und welches einen zweiten Widerstand aufweist, welcher höher ist als der erste Widerstand, und welcher Temperatur-gekoppelt ist. Das selbstbegrenzende Material 115 ist derart konfiguriert, dass der zweite Widerstand bei steigender Temperatur des selbstbegrenzenden Heizkabels 110 durch die Temperatur-Kopplung ansteigt, und dass dadurch eine selbstbegrenzte Maximaltemperatur vorgegeben ist.

Die Figuren 3 bis 8 zeigen jeweils einen Querschnitt durch ein selbstbegrenzendes Heizkabel gemäß Ausführungsbeispielen der Erfindung. Auch wenn diese in den Figuren als Rundkabel dargestellt sind, können sie auch mit anderen Querschnittsformen realisiert werden. Zur besseren Übersicht wurden zusätzliche elektrisch isolierende bzw. elektrisch leitfähige Schichten nicht eingezeichnet.

**Figur 3****:** der erste und der zweite Längenleiter 111, 112 weisen in der Breitenrichtung y eine erste Ausdehnung auf und in der Höhenrichtung z eine zweite Ausdehnung auf. Hierbei ist die zweite Ausdehnung größer als die erste Ausdehnung. Dadurch, dass die Längenleiter "nach oben gestreckt" sind, lässt sich ein Höhen-angepasstes selbstbegrenzendes Heizkabel 110 bereitstellen.

**Figur 4****:** das selbstbegrenzende Material 115 ist derart umgeformt, dass es gebogen vorliegt. Das selbstbegrenzende Material 115 ist Schlaufen-förmig, wobei isolierendes Material 121 innerhalb der Schlaufen eingeschoben ist. Das isolierende Material 121 kann dem elektrisch isolierenden Material 116, welches um das selbstbegrenzende Material herum angeordnet ist (nicht gezeigt), entsprechen.

**Figur 5****:** ähnlich Figur 4, aber die Schlaufen-Form ist noch deutlicher ausgeprägt und mehr isolierendes Material 121 ist verwendet.

**Figur 6****:** das selbstbegrenzende Material 115 ist im Wesentlichen kreisförmig ausgebildet zwischen den Längenleitern 111, 112.

**Figur 7****:** die Ausdehnung des selbstbegrenzenden Materials 115 zwischen dem ersten Längenleiter 111 und dem zweiten Längenleiter 112 ist größer als die Distanz zwischen dem ersten Längenleiter 111 und dem zweiten Längenleiter 112. Das selbstbegrenzende Material ist hierbei zwischen dem ersten Längenleiter 111 und dem zweiten Längenleiter 112 im Wesentlichen C-förmig angeordnet.

**Figur 8****:** ähnlich Figur 7, aber das selbstbegrenzende Material 115 ist im Wesentlichen in Form einer Mondsichel (bzw. eines fast geschlossenen Kreises) ausgebildet zwischen den Längenleitern 111, 112.

**Figur 9** zeigt Verlegemuster einer elektrischen Flächenheizung 100 gemäß Ausführungsbeispielen der Erfindung. Obwohl ein selbstbegrenzendes Heizkabel 100 verwendet wird, ist die verlegte elektrische Flächenheizung 100 nicht höher als 15 mm.

Figur 9a: elektrische Flächenheizung 100 mit Trägerstruktur 130 und darin eingebettetem gebogenem selbstbegrenzendem Heizkabel 110 bei Auslieferung.

Figur 9b: zum Verlegen im Baubereich wird die Trägerstruktur 130 eingeschnitten und das selbstbegrenzende Heizkabel 110 kann gebogen werden.

Figur 9c: das selbstbegrenzende Heizkabel 110 wird um 180° gebogen, um eine Zurückverlegung zu ermöglichen.

Figur 9d: das selbstbegrenzende Heizkabel 110 wird um 90° gebogen, um eine Eckaussparung zu ermöglichen.

Figur 9e: das selbstbegrenzende Heizkabel 110 wird mehrfach um 180° gebogen, um eine große Fläche bei einem einseitigen Anschluss zu ermöglichen.

**Figur 10** zeigt eine Detailansicht eines selbstbegrenzenden Heizkabels 110 gemäß einem Ausführungsbeispiel der Erfindung. Das selbstbegrenzende Material 115 bettet die Längenleiter 111, 112 ein und ist zwischen diesen angebracht. Um das selbstbegrenzende Material 115 ist eine elektrisch isolierende Schicht 116 angebracht. Diese kann z.B. ein elektrisch isolierendes Material mit hoher Wärmeleitfähigkeit aufweisen, z.B. ein keramisches Material wie Aluminiumhydroxid. Um die elektrisch isolierende Schicht 116 ist eine elektrisch leitfähige Schicht 117 angebracht, z.B. ein Kupfer-verzinntes Schutzgeflecht oder eine Aluminium Schutzfolie. Diese elektrisch leitfähige Schicht 117 weist vorzugsweise einen Schutzleiter auf. Die elektrisch leitfähige Schicht 117 ist schließlich von einem (insbesondere elektrisch isolierenden) Außenmantel 118 umschlossen.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Bezugszeichen

- 100: Elektrische Flächenheizung
- 102: Heizbereich
- 104: Freibereich
- 108: Erstes Flächenheizmodul
- 109: Zweites Flächenheizmodul
- 110: Selbstbegrenzendes Heizkabel
- 111: Erster Längenleiter
- 112: Zweiter Längenleiter
- 115: Selbstbegrenzendes Material
- 116: Elektrisch isolierende Schicht
- 117: Elektrisch leitfähige Schicht
- 118: Außenmantel
- 121: Isolierendes Material
- 130: Trägerstruktur
- 160: Verbinder, Verbindungselement

- TE: Trägerebene
- x: Längenrichtung
- y: Breitenrichtung
- z: Höhenrichtung

### Stand der Technik

- 200: Elektrische Flächenheizung
- 210: Selbstbegrenzendes Heizkabel
- 211, 212: Längenleiter
- 215: Selbstbegrenzendes Material

## Patentansprüche

1. Ein selbstbegrenzendes Heizkabel (110) für eine elektrische Flächenheizung (100), welches aufweist:
einen ersten Längenleiter (111) und einen zweiten Längenleiter (112), welche jeweils einen ersten Widerstand aufweisen,
wobei der erste Längenleiter (111) und der zweite Längenleiter (112) in dem selbstbegrenzenden Heizkabel (110) im Wesentlichen parallel nebeneinander angeordnet sind; und
ein selbstbegrenzendes Material (115), welches zwischen dem ersten Längenleiter (111) und dem zweiten Längenleiter (112) angeordnet ist, und welches einen zweiten Widerstand aufweist, welcher höher ist als der erste Widerstand, und welcher Temperatur-gekoppelt ist;
wobei das selbstbegrenzende Heizkabel (110) zumindest abschnittsweise einen Biegeradius aufweist, welcher das 30-fache, insbesondere das 20-fache, weiter insbesondere das 10-fache, oder weniger des größten Durchmessers des selbstbegrenzenden Heizkabels (110), im Querschnitt gesehen, ist;
und/oder
wobei das selbstbegrenzende Heizkabel (110) zumindest abschnittsweise
um 90°, insbesondere 180°, oder mehr in zwei zueinander senkrecht orientierte Raumrichtungen, insbesondere ohne wesentliche Aufwölbung, biegbar ist;
wobei das selbstbegrenzende Heizkabel (110) ferner zumindest eines der folgenden Merkmale aufweist:
wobei der erste und/oder der zweite Längenleiter (111, 112) in der Breitenrichtung (y) eine erste Ausdehnung aufweist und in der Höhenrichtung (z) eine zweite Ausdehnung aufweist, wobei die erste Ausdehnung von der zweiten Ausdehnung verschieden ist, wobei die zweite Ausdehnung größer ist als die erste Ausdehnung;
wobei das selbstbegrenzende Material (115) in einem Querschnitt des selbstbegrenzenden Heizkabels (110) gesehen, im Wesentlichen kreisförmig zwischen dem ersten Längenleiter (111) und dem zweiten Längenleiter (112) ausgebildet ist;
wobei das selbstbegrenzende Material (115) in einem Querschnitt des selbstbegrenzenden Heizkabels (110) gesehen, Schlaufen-förmig mit isolierendem Material (121) innerhalb der Schlaufen vorliegt;
wobei das selbstbegrenzende Material (115), in einem Querschnitt des selbstbegrenzenden Heizkabels (110) gesehen, zwischen dem ersten Längenleiter (111) und dem zweiten Längenleiter (112) im Wesentlichen wellenförmig oder C-förmig angeordnet ist.

2. Eine elektrische Flächenheizung (100) zum Verlegen im Baubereich, wobei die elektrische Flächenheizung (100) aufweist:
ein selbstbegrenzendes Heizkabel (110) nach Anspruch 1; und
eine Trägerstruktur (130), welche entlang zweier Haupterstreckungsrichtungen (x, y) ausgebildet ist und eine Trägerebene (TE) aufspannt;
wobei zumindest ein Abschnitt des selbstbegrenzenden Heizkabels (110) an und/oder in der Trägerstruktur (130) gebogen angeordnet ist,
wobei die Höhe des gebogenen Abschnitts des selbstbegrenzenden Heizkabels (110) in einer Höhenrichtung (z), welche senkrecht zu den zwei Haupterstreckungsrichtungen (x, y) orientiert ist, 15 mm oder weniger ist.

3. Die elektrische Flächenheizung (100) gemäß Anspruch 2,
wobei die Höhe des gebogenen Abschnitts des selbstbegrenzenden Heizkabels (110) 10 mm oder weniger, weiter insbesondere 8 mm oder weniger, weiter insbesondere 5 mm oder weniger, ist.

4. Die elektrische Flächenheizung (100) gemäß Anspruch 2 oder 3,
wobei das selbstbegrenzende Heizkabel (110) zumindest abschnittsweise einen Biegeradius aufweist, welcher das 30-fache, insbesondere das 20-fache, weiter insbesondere das 10-fache, oder weniger des größten Durchmessers des selbstbegrenzenden Heizkabels (110), im Querschnitt gesehen, ist.

5. Die elektrische Flächenheizung (100) gemäß einem der vorhergehenden Ansprüche 2 bis 4,
wobei das selbstbegrenzende Heizkabel (110) zumindest abschnittsweise um 90°, insbesondere 180°, oder mehr in den Haupterstreckungsrichtungen (x, y) und/oder der Höhenrichtung (z), insbesondere ohne wesentliche Aufwölbung, biegbar ist.

6. Die elektrische Flächenheizung (100) gemäß einem der vorhergehenden Ansprüche 2 bis 5,
wobei das selbstbegrenzende Heizkabel (110) aufweist:
einen ersten Bereich, welcher insbesondere zum Heizen eingerichtet ist, und eine erste Biegeeigenschaft aufweist; und
einen zweiten Bereich, welcher insbesondere nicht zum Heizen eingerichtet ist, und eine zweite Biegeeigenschaft aufweist;
wobei die erste Biegeeigenschaft und die zweite Biegeeigenschaft voneinander verschieden sind, insbesondere wobei die zweite Biegeeigenschaft eine höhere Elastizität aufweist als die erste Biegeeigenschaft.

7. Die elektrische Flächenheizung (100) gemäß einem der vorhergehenden Ansprüche 2 bis 6, wobei die elektrische Flächenheizung (100) zumindest eines der folgenden Merkmale aufweist:
wobei das selbstbegrenzende Heizkabel (110) eine wasserdichte, insbesondere tauchdichte, Isolierschicht aufweist;
wobei das selbstbegrenzende Heizkabel (110) eine elektrisch isolierende Schicht (116) aufweist, welche ein elektrisch isolierendes Material mit hoher Wärmeleitfähigkeit aufweist, insbesondere ein keramisches Material, weiter insbesondere Aluminiumhydroxid;
wobei das selbstbegrenzende Heizkabel (110) eine elektrisch leitfähige Schicht (117) aufweist, insbesondere welche mit einem Außenmantel (118) isoliert ist.

8. Die elektrische Flächenheizung (100) gemäß einem der vorhergehenden Ansprüche 2 bis 7,
wobei das selbstbegrenzende Heizkabel (110) konfiguriert ist bei einer Temperaturerhöhung, insbesondere auf 30° C oder mehr, weiter insbesondere auf 50° C oder mehr, eine Veränderung einer Biegeeigenschaft bereitzustellen.

9. Die elektrische Flächenheizung (100) gemäß einem der vorhergehenden Ansprüche 2 bis 8,
wobei das selbstbegrenzende Heizkabel (110) als Rundkabel ausgestaltet ist.

10. Die elektrische Flächenheizung (100) gemäß einem der vorhergehenden Ansprüche 2 bis 9,
wobei das selbstbegrenzende Material (115) konfiguriert ist, dass der zweite Widerstand bei steigender Temperatur des selbstbegrenzenden Heizkabels (110) durch die Temperatur-Kopplung ansteigt, und dass dadurch eine selbstbegrenzte Maximaltemperatur vorgegeben ist.

11. Die elektrische Flächenheizung (100) gemäß einem beliebigen der Ansprüche 2 bis 10,
wobei die Ausdehnung des selbstbegrenzenden Materials (115) zwischen dem ersten Längenleiter (111) und dem zweiten Längenleiter (112), in einem Querschnitt des selbstbegrenzenden Heizkabels (110) gesehen, größer ist als die Distanz zwischen dem ersten Längenleiter (111) und dem zweiten Längenleiter (112).

12. Die elektrische Flächenheizung (100) gemäß einem beliebigen der vorhergehenden Ansprüche 2 bis 11, wobei die elektrische Flächenheizung (100) zumindest eines der folgenden Merkmale aufweist:
wobei die elektrische Flächenheizung (100) ferner aufweist:
einen Heizbereich (102), in welchem der gebogene Abschnitt des selbstbegrenzenden Heizkabels (110) angeordnet ist; und
einen Freibereich (104), in welchem der gebogene Abschnitt des selbstbegrenzenden Heizkabels (110) nicht angeordnet ist;
wobei die elektrische Flächenheizung (100) ferner aufweist:
ein erstes Flächenheizmodul (108);
ein zweites Flächenheizmodul (109); und
einen Verbinder (160), welcher das erste Flächenheizmodul (108) und das zweite Flächenheizmodul (109) miteinander verbindet.

13. Ein Verfahren zum Herstellen eines selbstbegrenzenden Heizkabels (110) gemäß Anspruch 1 für eine elektrische Flächenheizung (100), das Verfahren aufweisend:
Anordnen von zwei Längenleitern (111, 112), welche jeweils einen ersten Widerstand aufweisen, im Wesentlichen parallel nebeneinander;
Bereitstellen eines selbstbegrenzenden Materials (115) zwischen dem ersten Längenleiter (111) und dem zweiten Längenleiter (112), welches einen zweiten Widerstand aufweist, welcher Temperatur-gekoppelt ist, und welcher höher ist als der erste Widerstand, derart, dass
das selbstbegrenzende Heizkabel (110) zumindest abschnittsweise einen Biegeradius aufweist, welcher das 30-fache, insbesondere das 20-fache, weiter insbesondere das 10-fache, oder weniger des größten Durchmessers des selbstbegrenzenden Heizkabels (110), im Querschnitt gesehen, ist;
und/oder
das selbstbegrenzende Heizkabel (110) zumindest abschnittsweise um 90°, insbesondere 180°, oder mehr in zwei zueinander senkrecht orientierte Raumrichtungen, insbesondere ohne Aufwölbung, biegbar ist;
wobei das Verfahren ferner aufweist:
Bereitstellen eines selbstbegrenzenden Flachband-Heizkabels (210);
Bearbeiten des selbstbegrenzenden Flachband-Heizkabels (210), derart, dass ein selbstbegrenzendes Heizkabel (110) im Wesentlichen als Rundkabel vorliegt.

14. Ein Verfahren zum Herstellen einer elektrischen Flächenheizung (100) für den Baubereich, wobei das Verfahren aufweist:
Herstellen eines selbstbegrenzenden Heizkabels (110) nach Anspruch 13 und Bereitstellen dieses selbstbegrenzenden Heizkabels (110);
Bereitstellen einer Trägerstruktur (130), welche entlang zweier Haupterstreckungsrichtungen (x, y) ausgebildet ist und eine Trägerebene (TE) aufspannt;
Biegen von zumindest einem Abschnitt des selbstbegrenzenden Heizkabels (110); und
Anordnen von zumindest dem gebogenen Abschnitt des selbstbegrenzenden Heizkabels (110) an und/oder in der Trägerstruktur (130); wobei die Höhe des gebogenen Abschnitts des selbstbegrenzenden Heizkabels (110) in einer Höhenrichtung (z), welche senkrecht zu den zwei Haupterstreckungsrichtungen (x, y) orientiert ist, 15 mm oder weniger ist, und wobei das Verfahren ferner aufweist:
Bearbeiten, insbesondere mittels einem aus der Gruppe, welche besteht aus: Falten, Rollen, Umformen, von selbstbegrenzendem Material (115) des selbstbegrenzenden Heizkabels (110) derart, dass das selbstbegrenzende Material (115) als zumindest eines aus der Gruppe vorliegt, welche besteht aus: im Wesentlichen kreisförmig, im Wesentlichen Schlaufen-förmig, wellenförmig, C-förmig.

15. Das Verfahren gemäß Anspruch 14, ferner aufweisend:
elektrisches Verbinden eines ersten Flächenheizmoduls (108) und eines zweiten Flächenheizmoduls (109) miteinander über einen Verbinder (160), wobei das elektrische Verbinden durch zumindest eines aus der Gruppe durchgeführt wird, welche besteht aus: Schneidklemmen, Crimpen, Stecken, Klemmen, Anpressen, Kleben, Schweissen, insbesondere Ultraschallschweissen oder Kaltverschweissen, Nieten, Clinchen, Schrauben, Löten.

## Claims

1. A self-limiting heating cable (110) for an electric panel heater (100), which comprises:
a first longitudinal conductor (111) and a second longitudinal conductor (112), which each have a first resistance,
wherein the first longitudinal conductor (111) and the second longitudinal conductor (112) are arranged substantially parallel next to one another in the self-limiting heating cable (110); and
a self-limiting material (115), which is arranged between the first longitudinal conductor (111) and the second longitudinal conductor (112), and which comprises a second resistance, which is higher than the first resistance, and which is temperature-coupled;
wherein the self-limiting heating cable (110) comprises at least in sections a bending radius, which is 30 times, in particular 20 times, further in particular 10 times, or less the largest diameter of the self-limiting heating cable (110), seen in cross-section;
and/or
wherein the self-limiting heating cable (110) is bendable at least in sections by 90°, in particular 180°, or more in two spatial directions oriented perpendicularly to one another, in particular without substantial bulging;
wherein the self-limiting heating cable (110) further comprises at least one of the following features:
wherein the first and/or the second longitudinal conductor (111, 112) comprises a first extension in the width direction (y) and comprises a second extension in the height direction (z), wherein the first extension is different from the second extension, wherein the second extension is larger than the first extension;
wherein the self-limiting material (115), seen in a cross-section of the self-limiting heating cable (110), is formed substantially circularly between the first longitudinal conductor (111) and the second longitudinal conductor (112);
wherein the self-limiting material (115), seen in a cross-section of the self-limiting heating cable (110), is loop-shaped with insulating material (121) within the loops;
wherein the self-limiting material (115), seen in a cross-section of the self-limiting heating cable (110), is arranged substantially wave-shaped or C-shaped between the first longitudinal conductor (111) and the second longitudinal conductor (112).

2. An electric panel heater (100) for laying in the construction sector, wherein the electric panel heater (100) comprises:
a self-limiting heating cable (110) according to claim 1; and
a support structure (130), which is formed along two main extension directions (x, y) and spans a support plane (TE);
wherein at least one section of the self-limiting heating cable (110) is arranged in a bent manner at and/or in the support structure (130),
wherein the height of the bent section of the self-limiting heating cable (110) in a height direction (z), which is oriented perpendicularly to the two main extension directions (x, y), is 15 mm or less.

3. The electric panel heater (100) according to claim 2,
wherein the height of the bent section of the self-limiting heating cable (110) is 10 mm or less, further in particular 8 mm or less, further in particular 5 mm or less.

4. The electric panel heater (100) according to claim 2 or 3,
wherein the self-limiting heating cable (110) comprises at least in sections a bending radius, which is 30 times, in particular 20 times, further in particular 10 times, or less the largest diameter of the self-limiting heating cable (110), seen in cross-section.

5. The electric panel heater (100) according to one of the preceding claims 2 to 4,
wherein the self-limiting heating cable (110) is bendable at least in sections by 90°, in particular 180°, or more in the main extension directions (x, y) and/or the height direction (z), in particular without substantial bulging.

6. The electric panel heater (100) according to one of the preceding claims 2 to 5,
wherein the self-limiting heating cable (110) comprises:
a first region, which is configured in particular for heating, and comprises a first bending property; and
a second region, which is configured in particular not for heating, and comprises a second bending property;
wherein the first bending property and the second bending property are different from one another, in particular wherein the second bending property comprises a higher elasticity than the first bending property.

7. The electric panel heater (100) according to one of the preceding claims 2 to 6, wherein the electric panel heater (100) comprises at least one of the following features:
wherein the self-limiting heating cable (110) comprises a waterproof, in particular immersion-proof, insulating layer;
wherein the self-limiting heating cable (110) comprises an electrically insulating layer (116), which comprises an electrically insulating material with high thermal conductivity, in particular a ceramic material, further in particular aluminum hydroxide;
wherein the self-limiting heating cable (110) comprises an electrically conductive layer (117), in particular which is insulated with an outer jacket (118).

8. The electric panel heater (100) according to one of the preceding claims 2 to 7,
wherein the self-limiting heating cable (110) is configured to provide a change in a bending property upon a temperature increase, in particular to 30°C or more, further in particular to 50°C or more.

9. The electric panel heater (100) according to one of the preceding claims 2 to 8,
wherein the self-limiting heating cable (110) is configured as a round cable.

10. The electric panel heater (100) according to one of the preceding claims 2 to 9,
wherein the self-limiting material (115) is configured such that the second resistance increases with increasing temperature of the self-limiting heating cable (110) due to the temperature coupling, and such that a self-limited maximum temperature is thereby pregiven.

11. The electric panel heater (100) according to one of the preceding claims 2 to 10,
wherein the extension of the self-limiting material (115) between the first longitudinal conductor (111) and the second longitudinal conductor (112), seen in a cross-section of the self-limiting heating cable (110), is larger than the distance between the first longitudinal conductor (111) and the second longitudinal conductor (112).

12. The electric panel heater (100) according to one of the preceding claims 2 to 11, wherein the electric panel heater (100) comprises at least one of the following features:
wherein the electric panel heater (100) further comprises:
a heating region (102), in which the bent section of the self-limiting heating cable (110) is arranged; and
a free region (104), in which the bent section of the self-limiting heating cable (110) is not arranged;
wherein the electric panel heater (100) further comprises:
a first panel heating module (108);
a second panel heating module (109); and
a connector (160), which connects the first panel heating module (108) and the second panel heating module (109) to each other.

13. A method for manufacturing a self-limiting heating cable (110) according to claim 1 for an electric panel heater (100), the method comprising:
arranging two longitudinal conductors (111, 112), which each have a first resistance, substantially parallel next to one another;
providing a self-limiting material (115) between the first longitudinal conductor (111) and the second longitudinal conductor (112), which comprises a second resistance, which is temperature-coupled, and which is higher than the first resistance, such that
the self-limiting heating cable (110) comprises at least in sections a bending radius, which is 30 times, in particular 20 times, further in particular 10 times, or less the largest diameter of the self-limiting heating cable (110), seen in cross-section;
and/or
the self-limiting heating cable (110) is bendable at least in sections by 90°, in particular 180°, or more in two spatial directions oriented perpendicularly to one another, in particular without bulging;
wherein the method further comprises:
providing a self-limiting flat ribbon heating cable (210);
processing the self-limiting flat ribbon heating cable (210) such that a self-limiting heating cable (110) is substantially a round cable.

14. A method for manufacturing an electric panel heater (100) for the construction sector, wherein the method comprises:
manufacturing a self-limiting heating cable (110) according to claim 13 and providing this self-limiting heating cable (110);
providing a support structure (130), which is formed along two main extension directions (x, y) and spans a support plane (TE);
bending at least one section of the self-limiting heating cable (110); and
arranging at least the bent section of the self-limiting heating cable (110) at and/or in the support structure (130);
wherein the height of the bent section of the self-limiting heating cable (110) in a height direction (z), which is oriented perpendicularly to the two main extension directions (x, y), is 15 mm or less, and wherein the method further comprises:
processing, in particular by means of one from the group consisting of: folding, rolling, forming, self-limiting material (115) of the self-limiting heating cable (110) such that the self-limiting material (115) is at least one from the group consisting of: substantially circular, substantially loop-shaped, wave-shaped, C-shaped.

15. The method according to claim 14, further comprising:
electrically connecting a first panel heating module (108) and a second panel heating module (109) to each other via a connector (160), wherein the electrical connecting is carried out by at least one from the group consisting of: cutting clamping, crimping, plugging, clamping, pressing, gluing, welding, in particular ultrasonic welding or cold welding, riveting, clinching, screwing, soldering.

## Revendications

1. Câble chauffant auto-limitant (110) pour un chauffage électrique de surface (100), qui présente :
un premier conducteur long (111) et un second conducteur long (112), qui présentent respectivement une première résistance, dans lequel le premier conducteur long (111) et le second conducteur long (112) sont agencés l'un à côté de l'autre de manière essentiellement parallèle dans le câble chauffant auto-limitant (110) ; et
un matériau auto-limitant (115), qui est agencé entre le premier conducteur long (111) et le second conducteur long (112) et qui présente une seconde résistance supérieure à la première résistance et couplée en température ;
dans lequel le câble chauffant auto-limitant (110) présente au moins par sections un rayon de courbure qui représente 30 fois, en particulier 20 fois, de manière plus particulière 10 fois, ou moins de 10 fois le plus grand diamètre du câble chauffant auto-limitant (110), vu en coupe transversale ;
et/ou
dans lequel le câble chauffant auto-limitant (110) peut être plié, en particulier sans bombement important, au moins par sections à 90°, en particulier à 180°, ou davantage, dans deux directions spatiales orientées perpendiculairement l'une à l'autre ;
dans lequel le câble chauffant auto-limitant (110) présente en outre au moins une des caractéristiques ci-dessous :
le premier et/ou le second conducteur long (111, 112) présente une première dilatation dans le sens de la largeur (y) et présente une seconde dilatation dans le sens de la hauteur (z), dans lequel la première dilatation est différente de la seconde dilatation, dans lequel la seconde dilatation est supérieure à la première dilatation ;
le matériau auto-limitant (115), vu en coupe transversale du câble chauffant auto-limitant (110), est formé de manière essentiellement circulaire entre le premier conducteur long (111) et le second conducteur long (112) ;
le matériau auto-limitant (115), vu en coupe transversale du câble chauffant auto-limitant (110), est en forme de boucle avec un matériau isolant (121) à l'intérieur des boucles ;
le matériau auto-limitant (115), vu en coupe transversale du câble chauffant auto-limitant (110), est agencé essentiellement avec une forme ondulée ou une forme de C entre le premier conducteur long (111) et le second conducteur long (112) .

2. Chauffage électrique de surface (100) à poser dans le domaine du bâtiment, dans lequel le chauffage électrique de surface (100) présente :
un câble chauffant auto-limitant (110) selon la revendication 1 ; et
une structure de support (130) qui est formée le long de deux directions d'extension principales (x, y) et qui couvre un plan de support (TE) ;
dans lequel au moins une section du câble chauffant auto-limitant (110) est agencée de manière courbe sur et/ou dans la structure de support (130) ; et/ou
dans lequel la hauteur de la section pliée du câble chauffant auto-limitant (110) est inférieure ou égale à 15 mm dans le sens de la hauteur (z) qui est orientée perpendiculairement aux deux directions d'extension principales (x, y).

3. Chauffage électrique de surface (100) selon la revendication 2, dans lequel la hauteur de la section pliée du câble chauffant auto-limitant (110) est inférieure ou égale à 10 mm, en particulier inférieure ou égale à 8 mm, en particulier inférieure ou égale à 5 mm.

4. Chauffage électrique de surface (100) selon la revendication 2 ou 3, dans lequel le câble chauffant auto-limitant (110) présente au moins par sections un rayon de courbure qui représente 30 fois, en particulier 20 fois, de manière plus particulière 10 fois, ou moins de 10 fois le plus grand diamètre du câble chauffant auto-limitant (110), vu en coupe transversale.

5. Chauffage électrique de surface (100) selon l'une quelconque des revendications précédentes 2 à 4, dans lequel le câble chauffant auto-limitant (110) peut être plié, en particulier sans bombement important, au moins par sections à 90°, en particulier à 180°, ou davantage dans les directions d'extension principale (x, y) et/ou dans le sens de la hauteur (z).

6. Chauffage électrique de surface (100) selon l'une quelconque des revendications 2 à 5, dans lequel le câble chauffant auto-limitant (110) présente :
une première zone, qui est conçue particulièrement pour le chauffage, et une première propriété de flexion ; et
une seconde zone, qui n'est pas conçue particulièrement pour le chauffage, et une seconde propriété de flexion ;
dans lequel la première propriété de flexion et la seconde propriété de flexion sont différentes l'une de l'autre, en particulier dans laquelle la seconde propriété de flexion présente une élasticité plus élevée que la première propriété de flexion.

7. Chauffage électrique de surface (100) selon l'une quelconque des revendications 2 à 6, dans laquelle le chauffage électrique de surface présente au moins une des caractéristiques ci-dessous :
le câble chauffant auto-limitant (110) présente une couche isolante étanche à l'eau, en particulier étanche en cas d'immersion ;
le câble chauffant auto-limitant (110) présente une couche électriquement isolante (116) qui présente un matériau électriquement isolant à conductivité thermique élevée, en particulier un matériau céramique, de manière plus particulière de l'hydroxyde d'aluminium ;
le câble chauffant auto-limitant (110) présente une couche électriquement conductrice (117), qui est en particulier isolée par une gaine extérieure (118).

8. Chauffage électrique de surface (100) selon l'une quelconque des revendications précédentes 2 à 7, dans lequel le câble chauffant auto-limitant (110) est configuré pour fournir une modification d'une propriété de flexion dans le cas d'une augmentation de température, en particulier supérieure ou égale à 30°C, en particulier supérieure ou égale à 50°C.

9. Chauffage électrique de surface (100) selon l'une quelconque des revendications précédentes 2 à 8, dans lequel le câble chauffant auto-limitant (110) est conçu sous la forme d'un câble rond.

10. Chauffage électrique de surface (100) selon l'une quelconque des revendications précédentes 2 à 9, dans lequel le matériau auto-limitant (115) est configuré de sorte que la seconde résistance augmente du fait du couplage de température lorsque la température du câble chauffant auto-limitant (110) augmente, et de sorte qu'une température maximale auto-limitée est ainsi spécifiée.

11. Chauffage électrique de surface (100) selon l'une quelconque des revendications 2 à 10, dans lequel la dilatation du matériau auto-limitant (115) entre le premier conducteur long (111) et le second conducteur long (112), vu en coupe transversale du câble chauffant auto-limitant (110), est supérieure à la distance entre le premier conducteur long (111) et le second conducteur long (112).

12. Chauffage électrique de surface (100) selon l'une quelconque des revendications 2 à 11, dans lequel le chauffage électrique de surface présente au moins une des caractéristiques ci-dessous :
le chauffage électrique de surface (100) présente en outre :
une zone de chauffage (102) au sein de laquelle est agencée la section pliée du câble chauffant auto-limitant (110) ; et
une zone libre (104) au sein de laquelle n'est pas agencée la section pliée du câble chauffant auto-limitant (110) ;
le chauffage électrique de surface (100) présente en outre :
un premier module de chauffage de surface (108) ;
un second module de chauffage de surface (109) ; et
un connecteur (160) reliant l'un à l'autre le premier module de chauffage de surface (108) et le second module de chauffage de surface (109).

13. Procédé de fabrication d'un câble chauffant auto-limitant (110) selon la revendication 1 pour un chauffage électrique de surface (100), le procédé comprenant les étapes consistant à :
agencer de manière essentiellement parallèle l'un à l'autre deux conducteurs longs (111, 112) présentant respectivement une première résistance ;
fournir, entre le premier conducteur long (111) et le second conducteur long (112), un matériau auto-limitant (115) qui présente une seconde résistance couplée en température et supérieure à la première résistance, de telle manière que
le câble chauffant auto-limitant (110) présente au moins par sections un rayon de courbure qui représente 30 fois, en particulier 20 fois, de manière plus particulière 10 fois, ou moins de 10 fois le plus grand diamètre du câble chauffant auto-limitant (110), vu en coupe transversale ; et/ou
le câble chauffant auto-limitant (110) peut être plié, en particulier sans bombement important, au moins par sections à 90°, en particulier à 180°, ou davantage, dans deux directions spatiales orientées perpendiculairement l'une à l'autre ;
dans lequel le procédé comprend en outre les étapes consistant à :
fournir un câble ruban chauffant auto-limitant (210) ;
traiter le câble ruban chauffant auto-limitant (210) de telle manière que le câble chauffant auto-limitant (110) se présente essentiellement sous la forme d'un câble rond.

14. Procédé de fabrication d'un chauffage électrique de surface (100) pour le domaine du bâtiment, dans lequel le procédé comprend les étapes consistant à :
fabriquer un câble chauffant auto-limitant (110) selon la revendication 13 et fournir ledit câble chauffant auto-limitant (110) ;
fournir une structure de support (130) qui est formée le long de deux directions d'extension principales (x, y) et qui couvre un plan de support (TE) ;
plier au moins une section du câble chauffant auto-limitant (110) ; et
agencer au moins la section pliée du câble chauffant auto-limitant (110) sur et/ou dans la structure de support (130) ;
dans lequel la hauteur de la section pliée du câble chauffant auto-limitant (110) est inférieure ou égale à 15 mm dans le sens de la hauteur (z) qui est orientée perpendiculairement aux deux directions d'extension principales (x, y).
dans lequel le procédé comprend en outre l'étape consistant à :
traiter, en particulier au moyen d'une opération appartenant au groupe constitué de : plier, rouler, former le matériau auto-limitant (115) du câble chauffant auto-limitant (110) de telle manière que le matériau auto-limitant (115) soit au moins d'une forme appartenant au groupe constitué de : essentiellement circulaire, essentiellement en forme de boucle, de forme ondulée, en forme de **C.**

15. Procédé selon la revendication 14, présentant en outre l'étape consistant à :
connecter électriquement un premier module de chauffage de surface (108) et un second module de chauffage de surface (109) l'un à l'autre par l'intermédiaire d'un connecteur (160), dans lequel la connexion électrique est effectuée grâce à au moins une des opérations appartenant au groupe constitué de : serrage avec coupe, sertissage, insertion, serrage, pressage, collage, soudage, en particulier soudage par ultrasons ou soudage à froid, rivetage, clinchage, vissage, brasage.
